# EUROPEAN PATENT SPECIFICATION

(11) **EP 1 636 140 B1**
(45) Date of publication and mention of the grant of the patent: **23.05.2012**
(21) Application number: 04742233.2
(22) Date of filing: 07.06.2004
(51) Int. Cl.: C02F 3/04

(54) **SMALL-SCALE TREATMENT UNIT FOR WASTE WATER**
KLEINE ABWASSERBEHANDLUNGSANLAGE
UNITE DE TRAITEMENT DES EAUX USEES A PETITE ECHELLE

(30) Priority: 09.06.2003 FI 20035088
(43) Date of publication of application: 22.03.2006
(73) Proprietor: BIOLAN OY, SF-27501 Kauttua (FI)
(72) Inventor: HAUKIOJA, Markku, FIN-27130 Eurajoki as. (FI); PAAVOLA, Kaj, FIN-27800 Säkylä (FI)
(74) Representative: LEITZINGER OY
(86) International application number: PCT/FI2004/050083
(87) International publication number: WO 2004/108611

(56) References cited:
- WO-A1-01/38236
- AT-B- 403 473
- GB-A- 471 200
- US-A- 5 958 239

## Description

The present invention relates to a small-scale treatment unit for waste water.

### Description of the prior art

Various biological filters are commonly employed in small-scale waste water treatment units. Performance of a biological filter is based on a so-called biofilm growing on the surface of a filling material used therein. The surface area of a biofilm essential for the performance of a treatment unit will be the larger the smaller the particles into which a filling material used in the filter can be disintegrated.

Another factor essential for a biological filter in terms of its performance is the retention time of waste water in the treatment unit.

A filling material commonly used in biological filters today comprises various filler bodies of plastic or rock material or an appropriate organic material. In order to prevent clogging of the treatment unit and to ensure gas exchange in a filter, the filter material must have a relatively high permeability to water.

The prior art documents AT 403 473 B, WO 01/38236 A1, and US-A-5 958239 disclose waste water treatment units with multiple solid bottom trays arranged descendingly relative to each other in the flow direction of the water to be treated.

In small-scale treatment units, particularly those intended for a single or a few households, the relative fluctuation in the amount of waste water is really significant. Since the treatment unit must be able to provide a passage for the entire amount of presently treated water even during exceptional load peaks, it will be necessary to provide the treatment unit with a throughput which is oversized relative to normal loading or to resort to flow rate equalizing systems which are technically difficult to implement.

A highly water permeable filter material reduces the retention time of water in a treatment unit, and hence the uniform distribution of water throughout the filter material layer in a rapidly water passing filter is technically difficult to achieve. These factors often affect the purification result of a biological treatment plant, especially in small-size, so-called treatment packs, in which water has a short flowing distance through the treatment unit.

The above problems have been addressed in small-scale treatment units e.g. by placing the filter material to be used at ascending levels in screen-bottomed baskets or trays. Thereby, the distribution of water in a filter material can be made more uniform, but the retention time of waste water in the filter will not be much longer.

Another commonly applied method for overcoming the above problems is to circulate water through a filter for a number of times. Recirculation enhances the performance of a treatment unit, yet requires a separate circulation pump and an associated control system, making the treatment unit technically more complicated and more expensive than a simple flow-through filter. This presents a problem, especially with small-size treatment packs, the design of which should be functionally as simple as possible for reasons of costs and for less maintenance.

### Description of the invention

It is an object of this invention to provide a water treatment plant, more specifically a small-scale treatment unit for waste water, wherein the above problems are all eliminated, regarding a uniform distribution of water, an increase of delay time, and avoiding the clogging of a filter.

In order to accomplish this, a small-scale waste water treatment unit of the invention as defined in claim 1 is characterized in that the discharge openings provided at one or more end walls or skirts of the trays used in the treatment unit are designed as a V-cut serration for the uniform distribution of water across the entire width of the tray.

As described above, the problems of prior known small-scale treatment units can be overcome by placing a filter material used in a small-scale treatment unit in shallow and solid-bottom trays, which preferably have a slight inclination and which are arranged in one or more series of trays. The number of trays can preferably be at least five in each series.

In each series of trays, water is preferably passed from a supply pipe to one end wall of the uppermost tray, from which it flows in the tray, which is preferably at a slightly inclined position, through a filter material to the opposite end wall of the tray and is able to flow through openings present therein into the next, lower-level tray in the series. This way the waste water to be treated can be passed in a substantially horizontal flow through the entire series of trays. From the final, lowermost tray of the series the water discharges through openings present in the end wall, which is preferably at a lower level, and can be guided into the treatment unit's discharge pipe.

The discharge openings in the wall of filter material trays, which wall lies preferably at a lower level, are preferably designed in the shape of a V-cut serration commonly used in water engineering, whereby water preferably flows smoothly into the next tray across the tray's entire width.

Other preferred embodiments of the invention are characterized by what is set forth in the appended dependent claims.

### Advantages gained by the invention over the prior art

The design according to the invention of a small-scale treatment unit offers benefits in a small-scale treatment unit over the prior art as follows:

The retention time of waste water in a treatment unit is increased as compared to prior biological filters, since the waste water to be treated, when progressing through a series of trays as described above, is forced to flow over a multiple distance as it flows from a supply pipe at the top of a treatment unit through the series of trays in a substantially horizontal flow to a discharge point located at the bottom of the series of trays.

The treatment unit according to the invention is effective in preventing the clogging of a treatment unit in the event of overload. In an overload condition, the level of water in the filter trays of a treatment unit rises inasmuch as the filter material does not have enough time to percolate the entire amount of water to be treated. The excess water flows as a short-cut flow over the layer of filter material into the next tray. The purification result of a treatment unit deteriorates in an overload condition, but its hydraulic permeability is not compromised.

The small-scale treatment unit according to the invention has a design which effectively ensures a uniform distribution of water as the discharge openings of every filter tray can be designed as a V-cut serration such that, whenever flowing from one tray to the next, the stream of water equalizes across the entire width of the tray.

### Application examples

The invention will now be described in more detail by way of application examples not to be regarded as limiting the scope of the invention.

In the application examples, the invention will be described with reference to the accompanying drawings, in which
- fig. 1: shows a cross-sectional view of a small-scale treatment unit for a one-family household, said view visualising the inclination of trays and the flow passage of water in the small-scale treatment unit,
- fig. 2: shows a cross-sectional view of an adjacent side of the small-scale treatment unit depicted in fig. 1, said view visualising the V-cut serration of water discharge openings in the trays of a small-scale treatment unit, and
- fig. 3: shows a partially cross-sectional, three-dimensional view of another small-scale treatment unit for 1-3 households, in which the trays are substantially sector-shaped and helically organised.

### Example 1

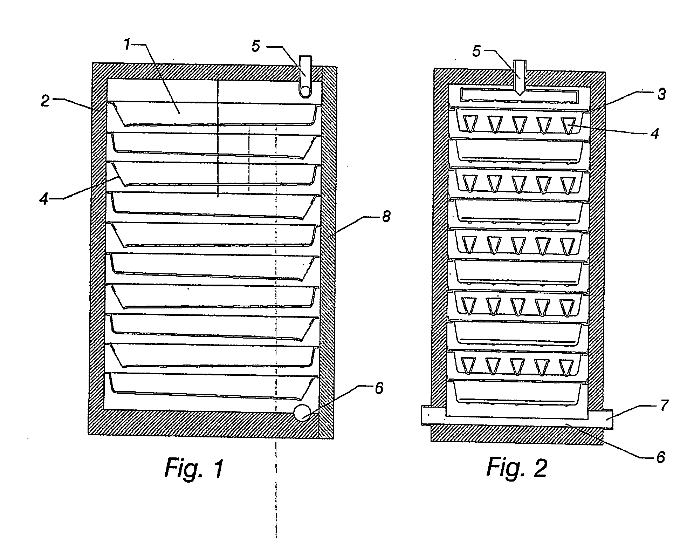

Fig. 1 shows by way of example a small-scale treatment unit intended for the treatment of grey waste waters in a one-family household, comprising one series (10 pieces) of mutually overlapped filter material trays 1. The trays have dimensions: height 8 cm, length 80 cm, and width 40 cm.

With regard to a filter material useful in the trays 1 of a treatment unit, it is possible to employ a suitable organic filter material, such as coconut fiber or chips, ground bark, chips, coke or coal or some appropriate mineral matter, e.g. crushed zeolite or limestone or any mixtures of these materials.

The series of trays is placed in a thermally insulated treatment cabinet 2. Each tray 1 rests on slide bars 3 braced against the walls of the treatment cabinet. The trays have an inclination of 2%, such that the successive trays are always inclined in directions opposite to each other. Consequently, the waste water being treated is always flowing in the descending trays 1 of the treatment unit in opposite directions. The lower end wall of each tray is provided with a row of discharge openings 4 for providing a flow path for the water to the next tray in the series located therebelow.

The waste water to be treated is passed along a supply and dispensing pipe 5 at the top of the treatment unit into the uppermost tray in the series of trays and the treated water discharges through the discharge openings of the lowermost trays in the series of trays into a discharge channel 6 and a discharge pipe 7 at the bottom of the treatment cabinet.

The treatment cabinet 2 has one of its end walls provided with a service door 8. The door enables the filter material trays movable on the slide bars to be withdrawn out of the treatment cabinet for replacing filter materials and cleaning the trays 1. The replacement of a filter material is performed 1-2 times a year, as required by loading.

This variant of a treatment unit is intended for installation on ground level, e.g. underneath a building.

### Example 2

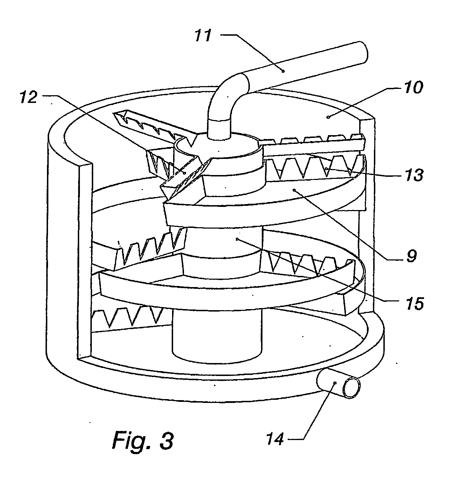

Fig. 3 shows by way of example a small-scale treatment unit intended for the treatment of grey waste waters in 1-3 households, comprising 3 series of filter material trays 9.

The small-scale treatment unit of fig. 3 is provided with six tiers of trays around a vertical shaft 15, each of said tiers of trays comprising three trays 9, each one of said trays being included in a different series of trays. Because the tiers of trays are six in number, each series of trays includes 6 pcs of trays 9. The trays 9 of three series of trays are disposed in a cylindrical thermally insulated treatment container 10, which thus houses a total of 18 pcs of trays 9. For the purpose of clarity, however, just one of the three parallel series of trays is depicted in fig. 2, such series comprising 6 trays.

In a plan view, the filter material trays 9 take on the shape of a partial sector constituted between two coaxial concentric circles. The outer circle has a radius of 15 cm and each tray has a height of 8 cm. The three trays 9 of each tier of trays are identical in size and have such dimensions that, in the process of fitting the trays in place in the treatment container 10, both radial walls of the trays will be forced to contact with the radial walls of both adjacent trays. Thus, no empty space is left between the trays. The walls of each tray are perpendicular to the floor of the tray. The trays can be either in a horizontal position or the inclination percent of their floors can be for example 2%. The inclination percent for the tray floors can be varied either by adjusting inclination of the floors or by setting the trays in an inclined position at optional angles of inclination.

The trays 9 of each series of trays are organised around the vertical shaft 15 so as to provide a descending helical path such that the successive trays overlap each other in a circumferential direction. Thus, the next tray in each series lies at least partially underneath the preceding higher-level tray in the series. In a plan view, the substantially sector-shaped trays 9 constitute preferably a circle with the vertical shaft 15.

The waste water to be treated is passed along a supply pipe 11 at the top rim of the treatment container into a dispensing channel 12 present on top of the highest tier of trays. From the dispensing channel the waste water to be treated flows to one end wall of whichever of the trays is the uppermost one in the series of trays and discharges by flowing through discharge openings 13 made in the opposite end wall in the shape of a V-cut serration into the next following tray. The treated waste water, having percolated through the several series of trays, is delivered from the treatment container into a discharge pipe 14 at the bottom thereof.

In this embodiment of a treatment unit, the helical flow of water maintains the same direction as it flows all the way through several series of trays.

For the purpose of replacing and cleaning a filter material, the filter material trays can be removed from the treatment container by way of a service cover.

This variant of a treatment unit is intended for underground installation.

## Claims

1. A small-scale treatment unit for waste water, the treatment unit comprising one or more series of solid-bottom trays (1, 9) arranged relative to each other descendingly in the flowing direction of the water to be treated and containing a replaceable or flushable filling material, and that the trays are set at an inclination of 0-10% and that the containers (1, 9) have at least one end wall or skirt thereof provided with openings (4, 13) for passing water in each series of trays always from a higher tray (1, 9) to the next tray therebelow, the waste water to be treated being forced to flow through each tray and a layer of filling material contained therein in a substantially horizontal flow to at least one end wall or skirt of the tray (1, 9), the openings (4, 13) present therein providing a passage for the water to flow into the next tray in the series, such that the waste water to be treated is forced to flow through all trays in each series of trays in the treatment unit and to discharge by way of the openings (4, 13) provided at the end wall or skirt of the lowermost tray in a series of trays, **characterized in that** the discharge openings (4, 13) provided at one or more end walls or skirts of the trays (1, 9) used in the treatment unit are designed as a V-cut serration for the uniform distribution of water across the entire width of the tray (1, 9).

2. A treatment unit as set forth in claim 1, **characterized in that** the trays (1) of each treatment series are rectangularly shaped and located at least in partially overlapping positions relative to each other.

3. A treatment unit as set forth in claim 2, **characterized in that** each series of trays includes 10 trays (1).

4. A treatment unit as set forth in claim 1, **characterized in that** the trays (9) in each series of trays are substantially sector-shaped as viewed from above and arranged around a vertical shaft (15) along a descending helical path, such that the trays (9) are overlapped in said path such that the next tray in each series lies at least partially under the preceding tray thereabove in the series, whereby the substantially sector-shaped trays (9) together with the vertical shaft (15), in a view from above, constitute a circle consisting of 2-6 substantially sector-shaped regions and the vertical shaft (15) surrounded by these regions.

5. A treatment unit as set forth in claim 4, **characterized in that** each series of trays includes 6 trays (9).

6. A treatment unit as set forth in claim 4 or 5, **characterized in that** the treatment unit is provided with three series of trays along three different, descending helical paths around the vertical shaft (15).

## Patentansprüche

1. Kleine Behandlungsanlage für Abwasser, wobei die Behandlungsanlage eine oder mehrere Reihen von Wannen mit massivem Boden (1, 9) umfasst, die in der Fließrichtung des zu behandelnden Wassers absteigend zueinander angeordnet sind und ein austauschbares oder spülbares Füllmaterial enthalten, und wobei die Wannen mit einer Neigung von 0 bis 10 % eingerichtet sind und die Behälter (1, 9) mindestens eine Endwand bzw. einen Rand aufweisen, die bzw. der mit Öffnungen (4, 13) zum Hindurchtreten von Wasser in jeder Reihe von Wannen, jeweils von einer höheren Wanne (1, 9) zu der nächsten darunter befindlichen Wanne, versehen ist, wobei das zu behandelnde Abwasser gezwungen wird, durch jede Wanne und eine Schicht von Füllmaterial, das darin enthalten ist, in einem im Wesentlichen waagerechten Fluss zu mindestens einer Endwand bzw. einem Rand der Wanne (1, 9) zu fließen, wobei die Öffnungen (4, 13), die darin vorhanden sind, einen Durchlass bereitstellen, damit das Wasser in die nächste Wanne in der Reihe fließt, derart, dass das zu behandelnde Abwasser gezwungen wird, durch alle Wannen in jeder Reihe von Wannen in der Behandlungsanlage zu fließen und mittels der Öffnungen (4, 13), die an der Endwand bzw. dem Rand der untersten Wanne in einer Reihe von Wannen gebildet sind, abzufließen, **dadurch gekennzeichnet, dass** die Abflussöffnungen (4, 13), die in einer oder mehreren Endwänden bzw. Rändern der Wannen (1, 9) gebildet sind, die in der Behandlungsanlage benutzt werden, als eine V-Kerbung zur gleichmäßigen Verteilung von Wasser über die gesamte Breite der Wanne (1, 9) ausgebildet sind.

2. Behandlungsanlage nach Anspruch 1, **dadurch gekennzeichnet, dass** die Wannen (1) jeder Behandlungsreihe rechteckig sind und sich zueinander in mindestens teilweise überlappenden Positionen befinden.

3. Behandlungsanlage nach Anspruch 2, **dadurch gekennzeichnet, dass** jede Reihe von Wannen 10 Wannen beinhaltet (1).

4. Behandlungsanlage nach Anspruch 1, **dadurch gekennzeichnet, dass** die Wannen (9) in jeder Reihe von Wannen im Wesentlichen sektorförmig sind, von oben betrachtet, und längs eines absteigenden schraubenförmigen Weges um einen senkrechten Schacht (15) herum angeordnet sind, derart, dass die Wannen (9) auf dem Weg überlappt werden, so dass die nächste Wanne in jeder Reihe mindestens teilweise unter der vorangehenden, darüber liegenden Wanne in der Reihe liegt, wodurch die im Wesentlichen sektorförmigen Wannen (9) zusammen mit dem senkrechten Schacht (15) von oben betrachtet einen Kreis bilden, der aus 2 bis 6 im Wesentlichen sektorförmigen Bereichen und dem senkrechten Schacht (15), der von diesen Bereichen umgeben ist, besteht.

5. Behandlungsanlage nach Anspruch 4, **dadurch gekennzeichnet, dass** jede Reihe von Wannen 6 Wannen beinhaltet (9).

6. Behandlungsanlage nach Anspruch 4 oder 5, **dadurch gekennzeichnet, dass** die Behandlungsanlage mit drei Reihen von Wannen längs dreier unterschiedlicher, absteigender, schraubenförmiger Wege um den senkrechten Schacht (15) herum versehen ist.

## Revendications

1. Unité de traitement de petite taille pour eaux usées, l'unité de traitement comprenant une ou plusieurs séries de plateaux à fond solide (1, 9) agencés les uns en-dessous des autres dans la direction d'écoulement de l'eau à traiter, et contenant un matériau de remplissage remplaçable ou rinçable, dans laquelle les plateaux sont réglés selon une inclinaison de 0-10%, et dans laquelle les conteneurs (1, 9) possèdent au moins une paroi ou jupe finale pourvue d'orifices (4, 13) pour laisser passer l'eau dans chaque série de plateaux, toujours à partir d'un plateau plus élevé (1, 9) vers le plateau suivant situé en-dessous, l'eau usée à traiter étant forcée à s'écouler à travers chaque plateau, et une couche de matériau de remplissage étant contenue dans celui-ci dans un flux substantiellement horizontal vers au moins une paroi ou jupe finale du plateau (1, 9), les orifices (4, 13) prévus dans celui-ci fournissant un passage permettant à l'eau de s'écouler dans le plateau suivant de la série, de manière à forcer l'eau usée à traiter à s'écouler à travers tous les plateaux de chaque série de plateaux dans l'unité de traitement, et à être évacuée par les orifices (4, 13) prévus dans la paroi ou jupe finale du plateau le plus bas dans une série de plateaux, **caractérisée en ce que** les orifices d'évacuation (4, 13) prévus dans une ou plusieurs parois ou jupes finales des plateaux (1, 9) utilisés dans l'unité de traitement sont conçus comme une dentelure coupée en V, pour la distribution uniforme de l'eau à travers toute la largeur du plateau (1, 9).

2. Unité de traitement selon la revendication 1, **caractérisée en ce que** les plateaux (1) de chaque série de traitement ont une forme rectangulaire et sont agencés de manière à se chevaucher au moins partiellement entre eux.

3. Unité de traitement selon la revendication 1, **caractérisée en ce que** chaque série de plateaux comprend 10 plateaux (1).

4. Unité de traitement selon la revendication 1, **caractérisée en ce que** les plateaux (9) de chaque série de plateaux ont une forme substantiellement en secteur, vus d'au-dessus, et sont agencés autour d'une tige verticale (15) le long d'un trajet hélicoïdal descendant, de sorte que les plateaux (9) se chevauchent dans ledit trajet, de manière à ce que le plateau suivant de chaque série se trouve au moins partiellement en-dessous du plateau précédent situé au-dessus dans la série, où, vus d'au-dessus, les plateaux (9) substantiellement en forme de secteur constituent, ensemble avec la tige verticale (15), un cercle consistant en 2-6 régions substantiellement en forme de secteur, avec la tige verticale (15) entourée par ces régions.

5. Unité de traitement selon la revendication 4, **caractérisée en ce que** chaque série de plateaux comprend 6 plateaux (9).

6. Unité de traitement selon la revendication 4 ou 5, **caractérisée en ce que** l'unité de traitement est pourvue de trois séries de plateaux, le long de trois trajets hélicoïdaux différents autour de la tige verticale (15).
